# EUROPEAN PATENT APPLICATION

(11) **EP 2 610 723 A2**
(43) Date of publication of application: **03.07.2013**
(21) Application number: 12199725.8
(22) Date of filing: 28.12.2012
(51) Int. Cl.: G06F 3/048, H04M 1/725

(54) **Method and apparatus pertaining to the presentation of icons**

(30) Priority: 30.12.2011 EP 11196148
(71) Applicant: Research In Motion Limited, Waterloo, ON N2L 3W8 (CA)
(72) Inventor: Lewin, Mathias, 211 40 Malmö (SE)
(74) Representative: Finnie, Peter John

(57) **Abstract**

A processor operably couples to a display and presents on that display a plurality of user-selectable icons for corresponding applications by highlighting at least one of the user-selectable icons as a function, at least in part, of a speed by which the corresponding application can be made user ready. By one approach the aforementioned speed is assessed by determining whether a given application is at least one of pre-cached and pre-loaded and hence available to deploy in a reduced amount of time as compared to applications that are not pre-cached and/or pre-loaded.

## Description

Field of Technology

The invention relates to mobile telecommunications devices, including but not limited to mobile telecommunications devices having touch-sensitive displays and their control.

Background

Modem mobile telecommunications devices often have dozens or even hundreds of installed applications with even greater numbers of such applications being technically possible. This means that users must typically look through extensive lists of numerous applications when they want to locate a specific application.

To facilitate browsing and selection amongst such choices, mobile telecommunications devices typically present relatively small visual representations of available applications on a display. The visual representations are often icons that are arranged in an array that users can scroll through when looking for a specific item.

It is known in the art to highlight specific applications in some way to thereby attract the user's eye to those specific applications. For example, the user may be provided with the ability to pre-select the particular applications that are to be highlighted.

Unfortunately, available design options in these regards do not necessarily meet the needs of all users in all application settings.

Brief Description of the Drawings

FIG. 1 is a flow diagram in accordance with the disclosure.

FIG. 2 is a top plan view in accordance with the disclosure.

FIG. 3 is a top plan view in accordance with the disclosure.

FIG. 4 is a block diagram in accordance with the disclosure.

FIG. 5 is a block diagram in accordance with the disclosure.

### Detailed Description

In accordance with a first aspect, there is provided a mobile communication device comprising:
a display;
a processor; and
a memory comprising instructions which, when carried out by the processor, configure the processor to cause the display to display a plurality of user-selectable icons for corresponding applications, and to highlight at least one of the user-selectable icons, the highlighted at least one user-selectable icon indicating that the corresponding application can be made user ready more quickly than a corresponding application associated with another user-selectable icon that is not highlighted.

By one approach the aforementioned speed is assessed by determining whether a given application is at least one of pre-cached (i.e., already cached) and pre-loaded (i.e., already loaded) and hence available to deploy in a reduced amount of time as compared to applications that are not pre-cached and/or pre-loaded. As another approach, in lieu of the foregoing or in combination therewith, a known propensity for a given application to launch relatively quickly can be similarly leveraged.

These teachings are highly flexible in practice and will accommodate, for example, also determining whether to highlight specific user-selectable icons as a further function, at least in part, of at least one of a static prioritization rating and/or a dynamically-determined prioritization rating.

By one approach, the displayed highlighted and non-highlighted icons are displayed without regard to a sequential order of presentation. As a result, the highlighted and non-highlighted icons can be intermingled with one another.

These teachings will accommodate a wide variety of approaches in these regards. By one approach, a highlighted icon includes something in addition to a normal presentation. For example, the highlighting can comprise using at least one of color, brightness, hue, contrast, chroma, saturation, lightness, opacity, transparency, translucency, shadows, and/or borders to distinguish a highlighted user-selectable icon from a non-highlighted user-selectable icon. As another example, highlighting can be conveyed in a relative sense by presenting "highlighted" icons normally while also presenting non-highlighted icons in an initially temporarily-abridged manner, with the non-highlighted icons then becoming normal in appearance over some period of time such as one second, two seconds, and so forth. The temporary abridgment can comprise, for example, beginning with grayscale and converting to full color in the normal appearance, beginning with highly transparent colors and converting to fully opaque in the normal appearance, and so forth.

So configured, a user can easily discern icons that correspond to quickly-available applications. This can permit a user to make effective and time-efficient use of their device even as the number of icons simultaneously appearing on their display increases and/or as the speed of their scrolling increases. As one simple example, while a user may prefer a particular graphics program when working with their stored photographic files, at a given time the user may instead simply wish to display, as quickly as possible, a given image file and hence may prefer the image-handling application that can be most quickly rendered available regardless of whether that image-handling application is their usually-preferred application.

These teachings are readily and economically applied in conjunction with numerous existing icon-presentation methodologies and can serve to greatly leverage the continued utility of those methodologies. The approaches disclosed herein are also highly scalable and can be employed with a wide variety and number of display paradigms, icons, and so forth. The present teachings are also readily employed not only with mobile telecommunications devices but also with other portable electronic devices such as, but not limited to, tablet/pad-styled computers and so forth.

The following describes an apparatus and method pertaining to the display of icons for applications. These teachings facilitate, for example, having a processor (also referred to herein sometimes as a control circuit) that operably couples to a display to present on that display a plurality of user-selectable icons for corresponding applications by highlighting at least one of the user-selectable icons as a function, at least in part, of a speed by which the corresponding application can be made user ready.

By one approach the control circuit is configured to highlight at least one of the available user-selectable icons, the highlighted at least one user-selectable icon indicating that the corresponding application can be made user ready more quickly than a corresponding application associated with another user-selectable icon that is not highlighted.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

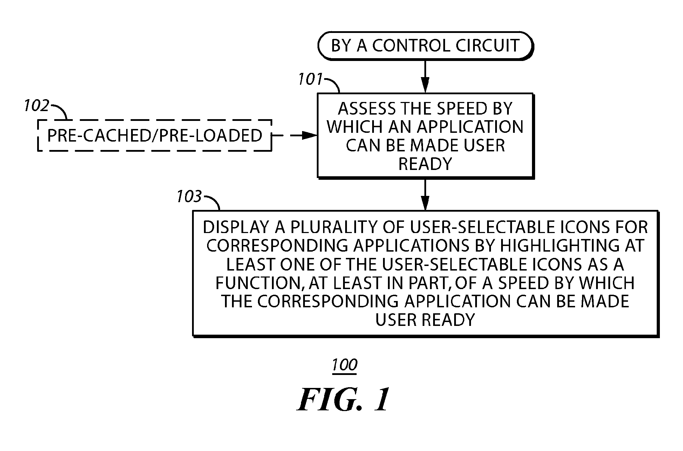

FIG. 1 presents an illustrative process 100 that can be carried out by a control circuit (such as the processor) of a portable electronic device. This process 100 includes, at 101, assessing the speed by which one or more applications can be made user ready. As used herein, this reference to "user ready" will be understood to refer to the application being loaded and hence available for essentially immediate use by a user as versus being merely available in a more general sense for the user to select.

By one optional approach, for example, this assessment can be based, at least in part, on the speed by which a given application can be made user ready as a function of determining that the application is pre-cached and/or pre-loaded 102. (As used herein, "pre-cached" will be understood to refer to the caching of application programming (which may or may not include the caching of corresponding data as well) while "pre-loaded" will be understood to refer to the background launching of the application such that "pre-loading" can, at least in some application settings, include pre-caching part or all of the corresponding application.)

Generally speaking, a given pre-cached or pre-loaded application can be made user ready more quickly (often on the order of a few seconds but sometimes on the order of many tens of seconds or more) than another application that is not pre-cached or pre-loaded. Accordingly, such criteria can often provide a useful measure of time to user readiness. These teachings will readily accommodate other relevant criteria, however. For example, an application that is able to uniquely load quickly due to its structure and/or relative size can also be assessed favorably in these regards if desired. As another example, an application that is hardwired into a given device may be rendered user ready within an unusually short period of time and hence may be recognized favorably here for that speed.

These teachings are quite flexible in these regards. For example, if desired, the assessed applications can be categorically similar to or different from one another as desired. For example, by one approach the assessed applications can include communications applications, image-processing applications, voice-based applications, streaming-based applications, and so forth as desired. As another example these teachings will accommodate assessing applications that are locally available (that is, applications that are fully resident on the implementing device) as well as applications that are remotely (in whole or in part) available (such as, but not limited to, cloud-based applications).

By one approach the foregoing assessment comprises a pre-assessment in that the assessment activity occurs prior to a time of need. For example, a given application can be assessed in these regards as part of booting up a corresponding processor. As another example, applications can be assessed and characterized in these regards when and as pre-caching/pre-loading allocation decisions/assignments are made. In such a case, of course, the pre-assessments for particular applications can dynamically vary as the control circuit pre-caches and/or pre-loads some applications while un-caching and/or un-loading other applications over time.

By another approach, in lieu of the foregoing or in combination therewith, the foregoing assessment can comprise, for example, dynamically assessing one or more available applications at a time of need per this process 100. This time of need can correspond, for example, to a need to present a plurality of application icons on a display, either statically or via a scrolling modality.

At 103 this process 100 provides for using the foregoing assessment information to display a plurality of user-selectable icons for corresponding applications by highlighting at least one of the user-selectable icons as a function, at least in part, of the speed by which the corresponding application can be made user ready. By one approach, this highlighting may occur as a function of one or more thresholds. As a simple example in these regards, an icon may be highlighted when the speed by which the corresponding application can be made user ready is less than the threshold while the icon remains non-highlighted when that speed exceeds the threshold. Illustrative examples of such thresholds include, but are not limited to, 50 milliseconds, 100 milliseconds, 200 milliseconds, 500 milliseconds, 1 second, and so forth as desired.

The aforementioned highlighting can occur as desired. By one approach this highlighting can occur when the device is first switched on and/or when the device first awakens from a sleep mode of operation. As another example this highlighting can occur while the user scrolls through a number of icons.

"Icon" will be understood to refer to traditional soft buttons that comprise pictograms that are typically displayed on a computer screen and used to navigate a computer system or mobile device. Such devices typically comprise a small picture or symbol that serves as a quick, intuitive representation of an application such as a software tool or function. As used herein, "icon" will also be understood to include non-pictorial devices such as, for example, alphanumeric text. Generally speaking, an icon is a graphic element that functions as an electronic hyperlink, file shortcut, or the like to select and call up the corresponding application.

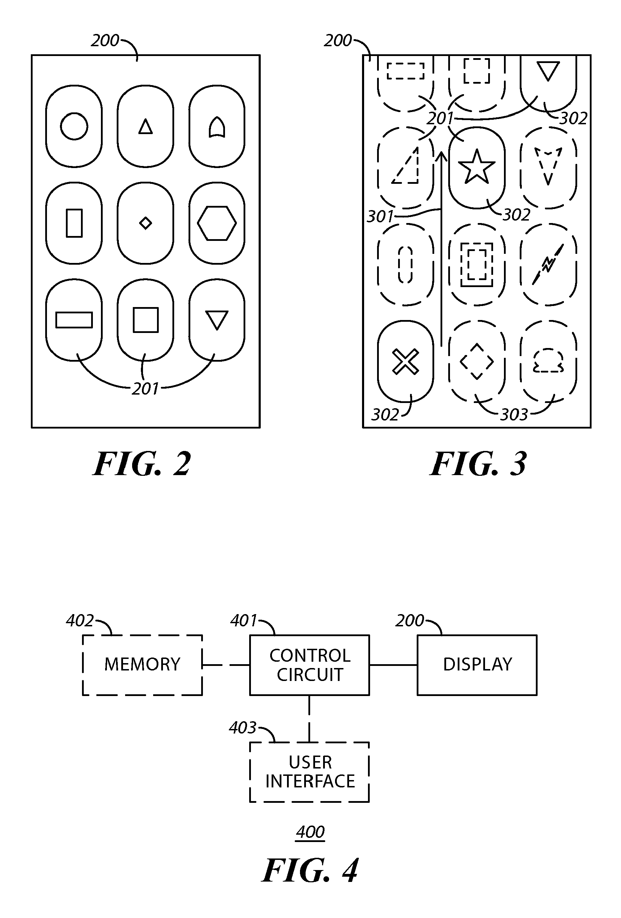

FIG. 2 provides an illustrative example of icons 201 on a touch-screen display 200. In this illustrative example, and without intending any limitations in these regards, each icon 201 comprises a virtual button of approximately the same general size. Each icon 201 also typically includes some differentiating visual content to permit the user to distinguish one icon 201 from another. As an example, one such icon 201, when touched by the user, might open a first email account inbox while another such icon 201 might open a second, different email account inbox. Depending upon the platform, there can literally be up to hundreds of thousands of possible icons available to display.

FIG. 3, in turn, illustrates the scrolling of a plurality of such icons 201. As used herein, the term "scroll" or "scrolling" refers to visually advancing a plurality of icons displayed as an array wherein the total number of icons may not be reasonably simultaneously viewable on the touch-screen display 200. The icons 201 may be advanced on a line-by-line, row-by-row, column-by-column, or page-by-page basis as desired. This scrolling can be a response, for example, to detecting that the user has swiped their fingertip vertically (up or down) on the described touch-screen display 200. By another approach, this scrolling may occur in response to detecting that the user has manipulated a mechanical interface (such as a trackball, touchpad, scroll wheel, or the like) that the corresponding apparatus offers for this purpose.

By one approach, highlighted and non-highlighted icons 201 are simultaneously displayed without regard to a sequential order of presentation. That is, the prioritization metric does not simply specify, for example, that the first ten displayed icons 201 are highlighted to the exclusion of all remaining displayed icons 201. By one approach the icons 201 can be displayed in an original default order of presentation and the highlighting (or non-highlighting) can be performed without regard for that order of presentation.

As noted above, these teachings provide for highlighting the user-selectable icons for applications that can be made more speedily available for use. Typically there is an ordinary or default presentation form to use when displaying the icons 201; that is, a form of presentation that simply is the visual representation of the icon to use when presenting the icon to a user during ordinary and customary usage of the corresponding device. This form will typically be based upon specifications regarding the size, shape, color, and other content of the icon (often as inherently specified by a graphic element file (such as a TIF or JPEG file) of the icon itself). With that in mind, the references herein to highlighting will be understood to comprise relative characterizations.

For example, by one approach a highlighted form can comprise a form that supplements an ordinary presentation of the icon 201. This supplementation can include such things as enlarging the size of the icon, altering a three-dimensional location of the icon, modifying one or more of hue, color, chroma, saturation, lightness, opacity, transparency, translucency, shadows, borders, brightness, and/or contrast of the icon, and/or using additional colors in conjunction with the icon.

By another approach, in lieu of the foregoing or in combination therewith, the highlighting can comprise using an element that changes over time. Such an approach might comprise, for example, varying the speed at which an icon is fully rendered when first displayed to distinguish a highlighted user-selectable icon from a non-highlighted user-selectable icon. By one approach, temporal animation behavior in the form of an appearance that fades in over time can have a fade-in time for each icon that is proportional to the launch availability estimate of the application represented by the icon. As another example this approach might include flashing part or all of the icon.

FIG. 3 provides a simple, illustrative example in these regards. FIG. 3 captures a moment in time as the icons 201 are scrolling (as represented by the arrow denoted by reference numeral 301) on the touch-screen display 200. In this example, and at this moment, three of the icons 302 are the icons that are being presented using a highlighted form (represented in FIG. 3 using solid lines) while the remaining icons 201 are presented using a non-highlighted form (represented in FIG. 3 using dashed lines).

So configured, the highlighted icons 302 are considerably easier to identify amongst a crowded display of icons 201 and/or as the icons 201 scroll on the touch-screen display 200. This ease of identification, in turn, makes it easier for the user to spot those icons as they move through the display area and therefore makes it easy for the user to select a useful application for their intended purpose that will also be available sooner rather than later.

As mentioned above, these teachings are highly flexible in practice and will accommodate any of a wide variety of modifications and additions. As one illustrative example in these regards, and without intending any particular limitations, the aforementioned highlighting of specific user-selectable icons can be a further function, at least in part, of one or more other factors. For example, one such factor could comprise a static prioritization rating (such as a prioritization selected by the user during initial installation of a given application). As another example, such a supplemental factor could comprise a dynamically-determined prioritization rating (that reflects, for example, how often the user selects a particular application). Historical usage data for how and when a user selects a particular application may also be used in dynamically-determining prioritization ratings. For example, if a user regularly uses a first-used application every morning, or a last-used application every night, such historical usage patterns can be used, at least in part, to determine prioritization ratings.

The above-described approaches are readily enabled using any of a wide variety of available and/or readily configured platforms, including partially or wholly programmable platforms as are known in the art or dedicated-purpose platforms as may be desired for some applications. Referring to FIG. 4, an illustrative approach in these regards will now be provided.

The enabling apparatus 400 can include portable electronic devices, for example, several types of mobile stations such as simple cellular telephones, smart telephones, wireless personal digital assistants (PDAs), and tablet-style computers. The enabling apparatus 400 can include a control circuit 401 that operably couples to a touch-screen display 200 as mentioned above. Such a control circuit 401 can comprise a fixed-purpose hard-wired platform or can comprise a partially or wholly programmable platform such as a processor. All of these architectural options are well known and understood in the art and require no further description here. This control circuit 401 is configured (for example, by using corresponding programming as will be well understood by those skilled in the art) to carry out one or more of the actions and/or functions described herein.

This apparatus 400 can also optionally include a memory 402 that operably couples to the control circuit 401. The memory 402 may be integral to the control circuit 401 or can be physically discrete (in whole or in part) from the control circuit 401 as desired. This memory 402 can serve, for example, to non-transitorily store the computer instructions that, when executed by the control circuit 401 (when the control circuit comprises a computer), cause the control circuit 401 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as an erasable programmable read-only memory (EPROM)).

This apparatus 400 can also include, if desired, a user interface 403 that is separate and apart from the aforementioned touch-screen display 200. Examples in these regards can include, but are not limited to, physical (i.e., non-virtual) keypads, trackballs, trackpads, and scroll wheels.

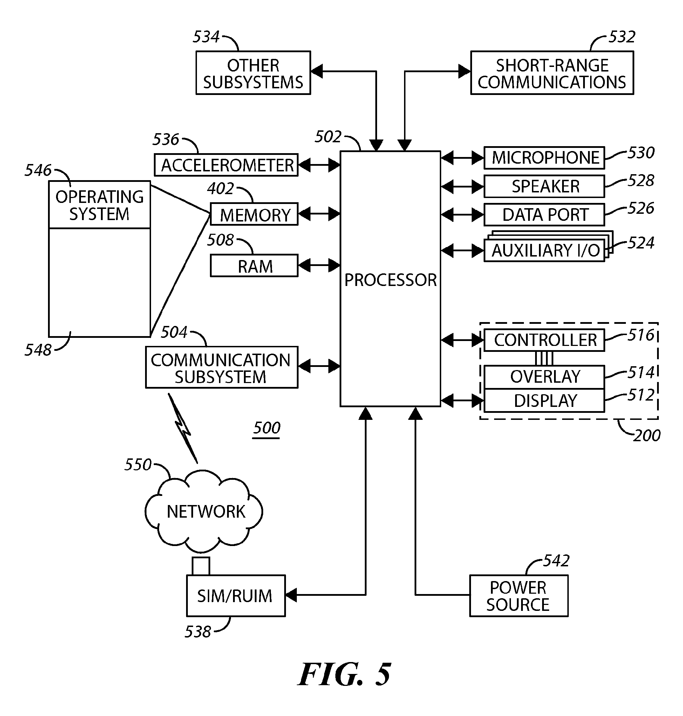

Without intending to limit the scope of the foregoing description, FIG. 5 presents an example of a portable electronic device 500 that is configured to comport with the present teachings. This device 500 includes a control circuit 401 implemented by way of a properly-programmed processor 502 that controls the overall operation of the portable electronic device 500. Communication functions, including data and voice communications, are performed through a communication subsystem 504. The communication subsystem receives messages from and sends messages to a wireless network 550. The wireless network 550 may be any type of wireless network, including, but not limited to, data wireless networks, voice wireless networks, and networks that support both voice and data communications. A power source 542, such as one or more rechargeable batteries or a port to an external power supply, powers the electronic device.

The processor 502 interacts with other elements, such as Random Access Memory (RAM) 508, the aforementioned memory 402, the various components of the touch-screen display 200 (these including, in this example, a display 512 with a touch-sensitive overlay 514 operably coupled to an electronic controller 516), one or more actuators 520, one or more force sensors 522, an auxiliary input/output (I/O) subsystem 524, a data port 526, a speaker 528, a microphone 530, a short-range communication subsystem 532, and other device subsystems 534 of choice.

One or more user interfaces are also provided. Input via a graphical user interface is provided via the touch-sensitive overlay 514. The processor 502 interacts with the touch-sensitive overlay 514 via the electronic controller 516. Information, such as the aforementioned icons 201 and other items that may be displayed or rendered on a portable electronic device, is displayed on the touch-screen display 200 via the processor 502.

The processor 502 may also interact with an accelerometer 536 that may be utilized to detect direction of gravitational forces or gravity-induced reaction forces.

To identify a subscriber for network access, the portable electronic device 500 may utilize a Subscriber Identity Module or a Removable User Identity Module (SIM/RUIM) card 538 for communication with a network, such as a wireless network 550. Alternatively, user identification information may be programmed into the memory 402.

The portable electronic device 500 includes an operating system 546 and software programs, applications, or components 548 that are executed by the processor 502 and are typically stored in a persistent, updatable store such as the memory 402. Additional applications or programs may be loaded onto the portable electronic device 500 through the wireless network 550, the auxiliary I/O subsystem 524, the data port 526, the short-range communications subsystem 532, or any other suitable subsystem 534.

For voice communications, the portable electronic device 500 can include a speaker 528 that outputs audible information converted from electrical signals, and a microphone 530 that converts audible information into electrical signals for processing.

So configured, these teachings facilitate the provision of an electronic device having any number of applications wherein the user can intuitively and easily identify particular applications that are speedily available. Such an understanding, in turn, can greatly contribute to helping the user to satisfy and meet their own moment-to-moment demands and needs as regards their use of the device.

The present disclosure may be embodied in other specific forms without departing from its essential characteristics. The described embodiments are to be considered in all respects only as illustrative and not restrictive. For example, these teachings can be readily applied in conjunction with a device having a physical keyboard (as versus, or in addition to, a virtual keyboard) in combination with either a touch-sensitive display or a display that is not sensitive to touch. The scope of the disclosure is, therefore, indicated by the appended claims rather than by the foregoing description. All changes that come within the meaning and range of equivalency of the claims are to be embraced within their scope.

## Claims

1. A mobile communication device (500) comprising:
a display (512);
a processor (502); and
a memory (402) comprising instructions which, when carried out by the processor, configure the processor to cause the display to display (103) a plurality of user-selectable icons (201) for corresponding applications, and to highlight at least one of the user-selectable icons, the highlighted at least one user-selectable icon indicating that the corresponding application can be made user ready more quickly than a corresponding application associated with another user-selectable icon that is not highlighted.

2. The mobile communication device of claim 1 wherein at least some of the applications that correspond to the user-selectable icons are categorically different from one another.

3. The mobile communication device of claim 1 or 2, wherein at least some of the applications that correspond to the user-selectable icons are locally available.

4. The mobile communication device of claim 1, 2 or 3, wherein the highlighting comprises using at least one of color, brightness, hue, contrast, chroma, saturation, lightness, opacity, transparency, translucency, shadows, and borders to distinguish a highlighted user-selectable icon from a non-highlighted user-selectable icon.

5. The mobile communication device of any preceding claim, wherein the highlighting comprises using speed of rendering the user-selectable icon to distinguish a highlighted user-selectable icon from a non-highlighted user-selectable icon.

6. The mobile communication device of any preceding claim, wherein the highlighting comprises an appearance that fades in over time, wherein the fade-in time for each icon is proportional to a speed by which the corresponding application can be made user ready.

7. The mobile communication device of any preceding claim, wherein the instructions further configure the processor to highlight specific user-selectable icons as a further function, at least in part, of at least one of:
a static prioritization rating;
a dynamically-determined prioritization rating.

8. The mobile communication device of any preceding claim, wherein the instructions further configure the processor to assess a speed by which an application can be made user ready, at least in part, by determining that an application is at least one of pre-cached and pre-loaded.

9. The mobile communication device of any preceding claim, wherein the processor is further configured to assess a speed by which an application can be made user ready, and to highlight a user-selectable icon if the assessed speed is faster than a threshold speed.

10. A method in a mobile communications device comprising:
operating a processor (502) coupled to a display (512) of to cause the display to display (103) a plurality of user-selectable icons (201) for corresponding applications and to highlight at least one of the user-selectable icons, the highlighted at least one user-selectable icon indicating that the corresponding application can be made user ready more quickly than a corresponding application associated with another user-selectable icon that is not highlighted.

11. The method of claim 10 wherein at least some of the applications as correspond to the user-selectable icons are categorically different from one another.

12. The method of claim 10 or 11, wherein at least some of the applications as correspond to the user-selectable icons are locally available.

13. The method of claim 10, 11 or 12, wherein the highlighting comprises using at least one of color, brightness, hue, contrast, chroma, saturation, lightness, opacity, transparency, translucency, shadows, and borders to distinguish a highlighted user-selectable icon from a non-highlighted user-selectable icon.

14. The method of any of claims 10 to 13, wherein the highlighting comprises using speed of rendering the user-selectable icon to distinguish a highlighted user-selectable icon from a non-highlighted user-selectable icon.

15. The method of any of claims 10 to 14, wherein highlighting at least one of the user-selectable icons as a function, at least in part, of a speed by which the corresponding application can be made user ready further comprises highlighting at least one of the user-selectable icons as a function, at least in part, of both:
the speed by which the corresponding application can be made user ready; and
at least one of:
a static prioritization rating;
a dynamically-determined prioritization rating.

16. The method of any of claims 10 to 15, further comprising assessing (101) the speed by which an application can be made user ready, at least in part, by determining that an application is at least one of pre-cached and pre-loaded.

17. A computer readable medium (402) storing instructions which when carried out by a mobile communication device (500) cause the device to perform the method of any of claims 10-16.
